# NOUVEAU FASCICULE DE BREVET EUROPEEN

(11) **EP 1 134 314 B2**
(45) Date de publication et mention de la décision concernant l'opposition: **27.10.2010**
(45) Mention de la délivrance du brevet: 08.09.2004
(21) Numéro de dépôt: 01420061.2
(22) Date de dépôt: 09.03.2001
(51) Int. Cl.: D04H 3/03, D04H 3/14, D04H 1/74, B29C 70/34, B29C 70/50, B29C 70/12

(54) **Produit intermédiaire composite, procédé de production d'un tel produit et utilisation à titre de matériau de moulage**
Zwischen-Verbundstoff, dessen Herstellungsverfahren und dessen Verwendung als Formmaterial
Intermediate composite product, manufacturing of such a product and usage as a molding material

(30) Priorité: 16.03.2000 FR 0003366
(43) Date de publication de la demande: 19.09.2001
(73) Titulaire: Hexcel Composites, 01121 Montluel Cedex (FR)
(72) Inventeur: Leblond, Eric, 69300 Caluire et Cuire (FR); Aubry, Jérôme, 38118 St. Baudille de la Tour (FR)
(74) Mandataire: Sarlin, Laure V.

(56) Documents cités:
- EP-A- 0 025 689
- EP-A- 0 376 472
- EP-A- 0 415 436
- FR-A- 2 740 149
- PATENT ABSTRACTS OF JAPAN vol. 015, no. 493 (M-1191), 13 décembre 1991 (1991-12-13) & JP 03 216307 A (TORAY IND INC), 24 septembre 1991 (1991-09-24)
- PATENT ABSTRACTS OF JAPAN vol. 010, no. 357 (M-540), 2 décembre 1986 (1986-12-02) & JP 61 154812 A (TOHO RAYON CO LTD), 14 juillet 1986 (1986-07-14)

## Description

La présente invention est relative au domaine des matériaux composites qui sont utilisés pour la réalisation d'articles, de pièces ou de produits finis obtenus, généralement, par conformation, ordinairement, par moulage.

Le domaine technique concerné est, plus spécifiquement, celui des pièces à caractère technique pour lesquelles il convient d'allier une légèreté certaine par rapport à celle de pièces réalisées en matériau traditionnel et, notamment, en métal, ainsi qu'une résistance mécanique globale élevée.

Dans de nombreux domaines techniques, on a recours à l'utilisation de matériaux composites pour atteindre les objectifs ci-dessus. A titre d'exemple, il convient de citer les domaines du transport aéronautique, maritime, terrestre, les domaines industriels en général, ainsi que celui des sports de loisirs et de compétition.

L'art antérieur a proposé un certain nombre de solutions pour réaliser des pièces composites.

Parmi celles-ci, il convient certainement de citer les pièces obtenues par conformation dans un moule approprié dans lequel des couches de nappes tissées ou non tissées de fibres de renfort sont drapées en étant associées à une matrice de résine thermoplastique ou thermodurcissable, soit préimprégnée, soit rapportée au fur et à mesure de la superposition des nappes tissées ou non tissées.

Une telle technique peut être considérée comme donnant satisfaction pour l'obtention de pièces creuses ou en partie ouvertes, présentant, de surcroît, des conformations non complexes, et qui ne peuvent pas être, le plus souvent, obtenues par usinage.

Par contre, un tel procédé n'est généralement pas mis en oeuvre lorsqu'il s'agit d'obtenir des pièces massives.

Pour de telles productions, la technique antérieure a proposé des procédés différents parmi lesquels il convient de citer, notamment, l'enseignement divulgué par la demande FR 2 770 802 selon laquelle on découpe des segments sensiblement rectangulaires de fibres noyées dans une matrice de résine thermoplastique ou thermodurcissable, puis on procède à un arrangement tridimensionnel de ces segments à l'intérieur de la cavité d'un moule dans lequel ledit arrangement est comprimé en étant soumis également à une montée en température convenable pour assurer le fluage de la matrice et l'obtention définitive d'une pièce compacte, durcie, dont la forme extérieure est la réplique inverse de la conformation de l'empreinte de moulage.

Les segments de forme rectangulaire sont découpés à partir d'une nappe non tissée de fibres de verre, de carbone ou d'aramide, de préférence allongées parallèlement.

Une telle technique permet certainement d'obtenir des pièces de caractéristiques convenables, mais elle pêche, essentiellement, par les conditions de mise en oeuvre qu'elle implique.

En effet, généralement, la coupe des segments de forme rectangulaire est effectuée dans des conditions industrielles, bien avant l'exigence de moulage, pour disposer d'un produit intermédiaire qui peut être stocké en vue de répondre aux demandes de production future.

Le stockage de ces segments implique une concentration volumique dans tout récipient approprié, ce qui entraîne, relativement très rapidement, une densification des segments par agglomération, les rendant peu appropriés à l'obtention de pièces finies présentant une densité homogène et des caractéristiques mécaniques reproductibles.

Il devient, de plus, difficile, sinon impossible, de réaliser, lors du moulage, l'arrangement tridimensionnel convenable à l'intérieur de la cavité de moulage à partir de segments qui, pour partie, peuvent être pris en masse.

Il pourrait être envisagé de résoudre ce problème en procédant au découpage des segments lors de l'opération de moulage, mais on comprend qu'une telle technique ne répond pas aux exigences de productions industrielles.

A titre de technique antérieure, il convient de citer également l'enseignement divulgué par la demande FR 2 740 149 proposant de partir d'un même produit de base constitué de segments allongés de fibres unidirectionnelles noyées dans une matrice de résine, d'arranger ces segments de manière aléatoire dans une cavité de moulage et d'en réaliser la conformation pour obtenir une plaque rigide, dense, compacte qui est ensuite utilisée à titre de matériau de base pour la constitution par conformation de pièces définitives.

Dans cette technique, la matrice de résine apparaît être essentiellement une ou un mélange de résines thermoplastiques.

Si une telle proposition résout le problème du stockage préalable à l'utilisation finale, en revanche, elle pêche par une inadaptation à la réalisation dans les meilleures conditions économiques de pièces éventuellement complexes, voire tridimensionnelles, qui nécessitent un patronage ou un découpage des plaques élémentaires primaires pour les adapter à la conformation géométrique et/ou volumique de la pièce à obtenir. Il en résulte un taux de chute élevé qui vient grever notablement le prix de revient de production des pièces définitives.

Il convient de noter, également, que ce procédé ne permet pas l'obtention de pièces d'épaisseur variable ou évolutive. Les limites d'utilisation d'une telle technique sont, d'ailleurs, indiquées dans le corps du mémoire descriptif de cette demande précisant la seule réalisation de pièces d'épaisseur constante.

EP 0 025 689, quant à lui, décrit un composé de moulage en feuille, en matière plastique renforcée par des fibres, comprenant une première couche formée de paillettes rectangulaires ou triangulaires remoulées ayant une largeur de 1 mm ou plus et une longueur de 3 mm ou plus, les paillettes étant composées de 30 à 90 % en poids de fibres de renforcement et de 70 à 10 % en poids d'une résine de matrice, ladite première couche étant liée par l'un de ses côtés ou par les deux à une seconde couche composée de la même résine de matrice et de 0 à 30 % en poids de fibres fragmentées de renforcement, l'épaisseur de la seconde couche étant inférieure à celle de la première couche. Ce composé, obtenu par moulage, est donc du type double feuille et sec comme indiqué page 3, ligne 12.

La présente invention vise à résoudre les problèmes de la technique antérieure et propose, à cette fin, un produit intermédiaire composite à titre de matériau intermédiaire pouvant être aisément stocké et mis en oeuvre lors de l'utilisation finale pour l'obtention, par conformation et moulage, de pièces creuses ou non, devant présenter des caractéristiques de légèreté relative et de résistance mécanique élevées, tout en étant produites à un prix de revient intéressant.

Pour atteindre les objectifs ci-dessus, l'invention concerne un produit intermédiaire composite à base de segments de fibres noyées dans une matrice de résine thermodurcissable, se présentant sous la forme d'au moins une couche **2** de segments plats multifibres **1** qui sont déposés les uns sur les autres en étant orientés aléatoirement et répartis de façon quasi isotrope dans le plan de la couche, de manière à former un tapis de masse et d'épaisseur constantes, caractérisé en ce que les segments sont liés, pour certains d'entre eux au moins, par adhésion au droit de leurs zones de croisement-superposition **3**, grâce à la résine thermodurcissable qui est partiellement polymérisée et qui présente, à température ambiante, un tack résiduel, de manière à former un tapis de faible cohésion propre présentant, à température ambiante, une souplesse relative et une aptitude à l'enroulement.

L'invention a aussi pour objet un procédé d'obtention du produit intermédiaire composite, un tel procédé étant caractérisé en ce qu'il consiste à :
- disposer d'une nappe comprenant un taux élevé de fibres noyées dans une matrice de résine thermodurcissable qui les imprègne à coeur,
- découper ladite nappe en lanières parallèles qui sont soumises à des coupes transversales pour former des segments,
- déposer lesdits segments à plat, de façon aléatoire, pour former au moins une couche de masse constante, homogène, dans le plan de laquelle lesdits segments sont répartis de façon quasi isotrope,
- soumettre la couche à l'action de moyens à même de provoquer l'adhésion d'au moins certains des segments en leurs points de croisement-superposition sans entierement polymériser la matrice de resine thermodurcissable pour conférer à ladite couche une cohérence propre et une souplesse relative.

L'invention a encore pour objet l'utilisation du produit intermédiaire composite à titre de matériau de base pour la formation, par moulage à chaud, d'au moins un article fini.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une perspective partielle schématique du produit intermédiaire composite selon l'invention.

La **fig. 2** est une perspective partielle montrant, à plus grande échelle, une disposition structurelle caractéristique du produit intermédiaire.

Les **fig. 3** à **7** sont des vues schématiques en coupe-élévation illustrant différentes variantes de réalisation structurelles du produit intermédiaire composite.

La **fig. 8** est une perspective schématique illustrant différentes étapes caractéristiques du procédé d'obtention du produit intermédiaire composite.

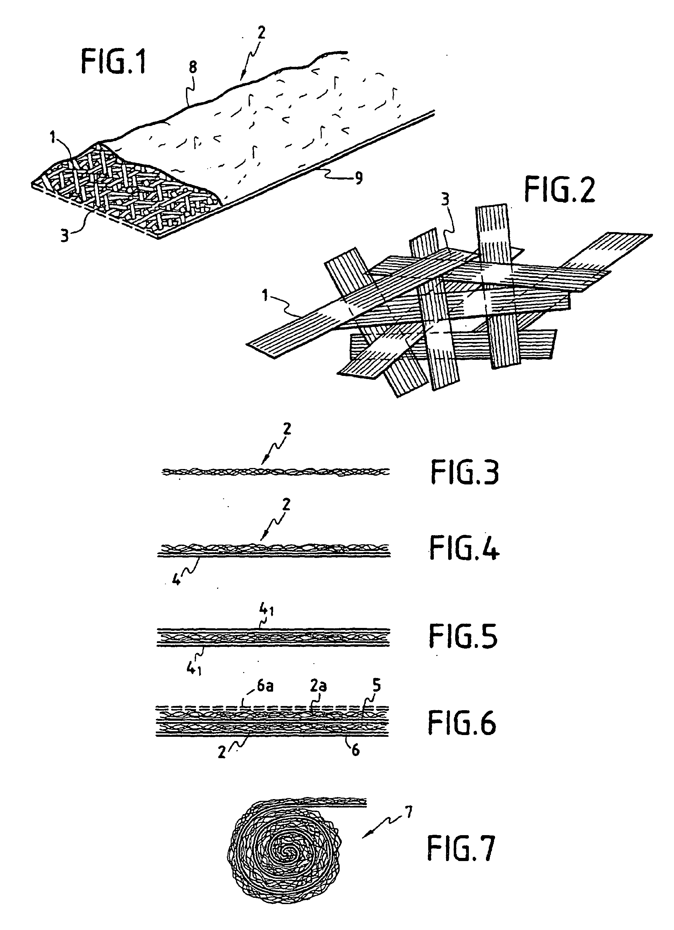

Selon les **fig. 1** et **2**, le produit intermédiaire composite est constitué à base de segments **1** de fibres qui, dans l'exemple illustré, sont unidirectionnelles et sont disposées parallèlement les unes aux autres en étant noyées dans une matrice de résine thermodurcissable conférant, à chaque segment, une tenue ou une cohérence propre.

Au sens de l'invention et dans cet exemple, les segments **1** sont issus par découpage d'une nappe à fibres parallèles mais il doit être considéré que lesdits segments pourraient être produits à partir d'une nappe tissée déséquilibrée entre fils de chaîne et de trame ou, encore, équilibrée et pouvant aussi être réalisée à partir de toute armure appropriée.

Les segments de fibres sont, de préférence, de forme rectangulaire et de faible épaisseur relative et présentent des caractéristiques dimensionnelles qui peuvent être considérées comme identiques.

Parmi les fibres pouvant être retenues, il convient de citer les fibres de carbone, de verre, les fibres aramides, céramiques, mais aussi toutes fibres, même naturelles, qui sont imprégnables.

Le produit intermédiaire composite se présente sous la forme d'au moins une couche ou tapis **2** constitué à partir des segments **1** qui présentent, de préférence, des caractéristiques dimensionnelles identiques et qui sont déposés, de façon aléatoire, les uns sur les autres, en étant répartis de façon quasi isotrope dans le plan de la couche à laquelle ils peuvent conférer une épaisseur variable selon l'utilisation ultérieure qui est réservée au produit intermédiaire composite.

La couche **2** possède, par elle-même, une cohésion propre, ainsi qu'une souplesse relative, caractéristiques qui lui sont conférées par l'intermédiaire des segments qui sont liés, pour certains au moins d'entre eux, au moins par adhésion au droit de leurs zones de croisement-superposition, tel que défini par la référence **3** à la fig. **2**.

De préférence, l'adhésion résulte de la présence de la matrice de résine non entièrement polymérisée et de l'application d'une pression relative exercée sur les segments **1** perpendiculairement au plan de la couche **2**.

Cette adhésion confère une cohésion propre à la couche, tout en lui réservant une souplesse relative favorisant, pour son utilisation ou son stockage, une déformation réversible, telle que, par exemple, un possible enroulement ou, encore, une aptitude au nappage ou au drapage.

Le produit intermédiaire composite peut être produit sous la forme d'une simple couche **2**, tel qu'illustré par la **fig. 3**, ou comporter, comme montré par la **fig. 4**, un support **4** ou un substrat de manipulation, de conditionnement, de production, voire de constitution, qui est de caractère éventuellement pelable ou détachable.

Le substrat **4** peut, le cas échéant aussi, être remplacé par un élément plan, dit de renfort, associé par adhésion à la couche **2** à laquelle il est destiné à conférer une amélioration des caractéristiques mécaniques, lors de la mise en oeuvre ultérieure, telle qu'elle est rapportée ci-après. Le renfort est, de préférence, de type continu et de même nature chimique, au moins en partie polymérisé.

La **fig**. **5** montre la possibilité de réaliser le produit intermédiaire composite en lui faisant comporter, sur ses deux faces des supports ou substrats **4₁**, qui peuvent être des papiers pelables ou des éléments de renfort du type évoqué précédemment.

La **fig. 6** montre une réalisation plus complexe selon laquelle le produit intermédiaire comporte deux couches **2a** qui sont liées entre elles par un substrat **5** constituant une âme de renfort et dont l'une au moins peut être revêtue d'un support ou substrat, tel que **6, 6a,** à caractère détachable ou non ou encore à caractère structurel. L'âme de renfort peut être constituée d'un ou plusieurs plis d'un complexe préimprégné destiné à améliorer les caractéristiques mécaniques de la pièce finale. Le substrat **5** est alors, avantageusement, de même nature chimique que les éléments de la couche et la résine qui le constitue, pour partie au moins, se trouve au moins en partie polymérisée.

La **fig. 1** montre que le produit intermédiaire composite est, de préférence, réalisé en forme de bande ou de plaque. Par contre, la **fig. 7** montre que, compte tenu de la souplesse relative, le produit intermédiaire composite peut être obtenu sous la forme d'un enroulement 7 d'une bande, telle que celle illustrée par la **fig. 1**, dans laquelle la largeur est faible devant la longueur.

Dans tous les cas, le produit intermédiaire composite peut comporter des bordures naturelles, telles que **8**, voire franches, telles que **9**, et qui résultent alors d'une opération de coupe préalable visant à supprimer la dispersion marginale des segments **1** déposés aléatoirement, comme il est dit précédemment.

A titre d'exemple, les segments **1**, par exemple à base de fibres unidirectionnelles parallèles, noyées dans une résine thermodurcissable, peuvent présenter une longueur de 10 à 100 mm, une largeur de 5 à 50 mm et une masse surfacique de 130 à 1 000 g par mètre carré de fibres sèches.

De préférence et dans cet exemple, les segments **1** sont issus de nappes de fibres multifilaments à taux de fibres élevés, par exemple et avantageusement au moins de 12 K pour du carbone et de 1 200 Tex pour du verre, qui sont disposées linéairement et parallèlement entre elles dans une matrice de résine dont le taux massique peut être compris entre 15 et 40 % de résine par rapport à la masse totale fibres-matrice. L'imprégnation à coeur de fibres multifilaments à taux de fibres élevé, notamment parallèles, selon l'invention permet de disposer d'un produit intermédiaire de caractéristique économique avantageuse.

Des segments **1** peuvent aussi être produits à partir de fibres de type aluminosilicate ou aluminium oxyde noyées dans une matrice de polyphénylméthylsiloxane de taux massique compris entre 50 et 60 %.

Selon une autre caractéristique de l'invention, la couche **2** présente une épaisseur sensiblement constante et offre une tolérance de grammage qui est de ± 5 % en tous points pris dans son plan. De cette manière, la couche **2** possède un taux volumique de fibres constant et homogène et l'orientation et le dépôt de manière aléatoire fournissent à la couche une caractéristique de répartition quasi isotrope des segments **1** dans le plan et dans l'épaisseur.

Parmi les résines thermodurcissables pouvant être utilisées pour constituer la matrice, il convient de citer les polyester, vinylester, époxydes, bismaléimides, polymides, phénoliques.

Une certaine adhésivité résiduelle connue en langue anglaise sous le terme de "tack" est conférée à la resine thermodurcissable constitutive de la matrice, résultant, à la fois, des différents constituants de la formulation chimique retenue et du tg de la résine non polymérisée lorsqu'il se situe entre - 10 et + 20°C.

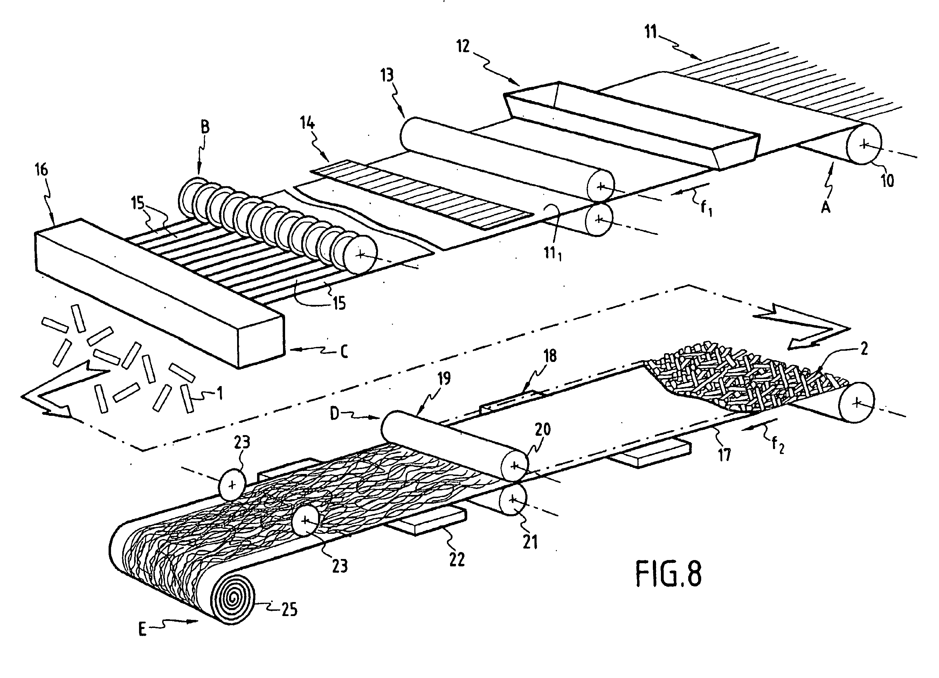

La **fig. 8** montre, à titre indicatif et de façon schématique, une installation matérialisant les différentes étapes du procédé d'obtention du produit intermédiaire composite selon l'invention.

Dans une étape **A** et selon un premier exemple, il est procédé à la mise à plat de fibres, fils, mèches multifilaments qui sont étalés, parallèlement les uns aux autres par l'intermédiaire d'un dispositif, tel que **10,** consistant, notamment, en un cylindre tournant présentant, à sa périphérie, une multitude de gorges, saignées ou cannelures transversales. Le dispositif **10** est destiné à favoriser, réaliser, entretenir un étalement des multifilaments constitutifs des fils ou des fibres, de manière à former une sorte de nappe **11** qui est déplacée dans le sens de la flèche **f₁** pour passer en dessous d'un poste d'imprégnation **12** assurant, par exemple, la distribution d'une quantité dosée de résine thermodurcissable. Le poste d'imprégnation **12** peut, bien entendu, être constitué par tout dispositif approprié, tel qu'une caisse de tête ou un bassin permettant de réaliser l'imprégnation des fibres par la méthode, dite au trempé.

A la sortie du poste d'imprégnation, la nappe **11** traverse un poste de calandrage **13** ayant aussi pour fonction d'exprimer le surplus de résine, de manière à constituer une nappe composite **11₁** dans laquelle les fibres ou multifilaments initiaux sont noyés, de façon homogène, dans une matrice de résine, de concentration dosée. Au-delà du poste **13,** la nappe composite **11₁** est passée sous une unité de chauffage **14**, de manière à conférer une cohérence relative à la nappe **11₁.**

Selon une variante, la nappe **11₁** est constituée d'un tissu équilibré ou non qui peut être préimprégné ou non.

La nappe **11₁** est ensuite dirigée vers un poste **B,** au sein duquel elle subit une opération de découpes longitudinales, visant à produire des bandes ou lanières **15** qui s'étendent sensiblement parallèlement, de manière à être introduites dans une tête de coupe **16** constituant, par elle-même, un poste **C** de production de segments **1**.

Les différents segments **1** sont déposés de façon aléatoire sur un support **17** qui peut être constitué directement par le tapis supérieur d'un transporteur sans fin ou par un support ou substrat d'acheminement dont la fonction est de recevoir les différents segments **1** et de les acheminer sous la forme d'une couche **2** vers les postes successifs de l'installation.

Il doit être considéré que le support **17** peut aussi représenter un élément de renforcement, tel qu'une nappe, tissée ou non tissée, préimprégnée ou non, destiné à constituer une âme ou à contribuer au renforcement de la couche **2**, comme cela est évoqué en relation avec les **fig. 4**, **5 et 6**.

Par l'intermédiaire du poste **C** ou d'une autre façon connue de l'homme de l'art, les différents segments **1** sont déposés de façon aléatoire sur le support ou le transporteur **17** de manière à être placés à plat dans le plan de la couche **2** future qu'ils constituent sur une épaisseur appropriée, en étant répartis de manière quasi isotrope. Progressivement à sa formation, la couche **2** transite dans le sens de la flèche **f₂,** en vue de progresser à travers ou au-dessus d'une table de chauffage **18** précédant un poste **D** où une pression relative est exercée perpendiculairement au plan de la couche **2**, de manière à soumettre les différents segments **1** à une liaison d'adhésion en leurs points de croisement-superposition, tels que référencés **3** à la **fig. 2**.

Le poste **D** peut être constitué, à titre d'exemple, à la manière d'une calandreuse **19** comprenant deux rouleaux **20** et **21** dont l'un au moins peut éventuellement être chauffant, pour que son action vienne compléter, voire se substituer, à celle de la table chauffante **18**.

Le poste **D** est complété, en aval dans le sens de déplacement selon la flèche **f₂**, par une table **22,** dite de refroidissement, qui a pour effet de fixer la couche **2** dans l'état d'adhésion des segments **1,** tout en laissant subsister la résine constitutive de la matrice dans un état dans lequel une adhésivité relative et résiduelle est présente.

Par adhésivité, il faut entendre le concept découlant de l'expression "tack" et qui, dans l'espèce, peut être apprécié comme offrant à la couche **2** une possibilité d'être repliée sur elle-même et d'être maintenue dans cet état par la liaison d'adhésivité établie entre les deux faces côte à côte.

Le contrôle des vitesses de déplacement selon les flèches **f₁** et **f₂** permet de maîtriser la masse surfacique de la couche **2**.

Selon le procédé de l'invention, il est avantageux de soumettre la couche **2,** soit en amont, soit en aval du poste **D,** à une opération de découpe linéaire des bordures par l'intermédiaire d'organes coupants **23,** de façon à éliminer les tranches extrêmes d'épaisseur, de compactage, de grammage plus ou moins aléatoire, qui caractérisent les dispersions marginales, afin d'obtenir une couche **2** de caractéristiques physiques et mécaniques constantes sur toute la longueur et tous points de la largeur.

La **fig. 8** montre, à titre d'exemple, un poste ultime **E** au niveau duquel la couche **2** produite est alors conditionnée sous la forme d'un enroulement **25** qui est de nature à favoriser le stockage, le transport, voire la manipulation sur des machines de reprise au niveau desquelles un patronage ou une découpe de la couche **2** est effectué pour disposer d'un matériau composite intermédiaire propre à la réalisation par moulage d'une pièce finie.

Bien que cela ne soit pas représenté, il doit être considéré, au sens de l'invention, que l'utilisation du produit intermédiaire composite, constitué par la couche **2** offre, à tout utilisateur, la possibilité de découper cette couche, de manière à disposer d'autant d'épaisseurs qu'il convient pour réaliser une pièce future, ces différentes épaisseurs étant placées dans la cavité d'un moule formant matrice dans laquelle un poinçon est inséré sous des conditions de pression et de température convenables, de manière à réaliser à chaud la conformation d'un article fini dont le démoulage peut être favorisé par la présence d'un agent de démoulage.

L'invention permet ainsi d'obtenir un produit fini ou un article définitif dont les caractéristiques de forme et de résistance mécanique sont directement en relation avec le produit intermédiaire composite utilisé pour sa formation.

Il doit certainement être considéré, au sens de l'invention, que le produit intermédiaire obtenu peut être utilisé seul, comme évoqué ci-dessus, ou en association avec un renfort, par exemple des semi-produits à fibres continues ou, encore, des stratifiés prédisposés dans le moule, afin de renforcer localement et/ou dans certaines directions le comportement final du produit composite obtenu. Il peut ainsi être prévu de disposer dans le moule un renfort continu de même nature chimique, au moins en partie polymérisé et qui peut être constitué d'un ou de plusieurs plis d'un complexe préimprégné.

## Revendications

1. Produit intermédiaire composite à base de segments de fibres noyées dans une matrice de résine thermodurcissable, se présentant sous la forme d'au moins une couche (**2**) de segments plats multifibres (**1**) qui sont déposés les uns sur les autres en étant orientés aléatoirement et répartis de façon quasi isotrope dans le plan de la couche, de manière à former un tapis de masse et d'épaisseur constantes, **caractérisé en ce que** les segments sont liés, pour certains d'entre eux au moins, par adhésion au droit de leurs zones de croisement-superposition (**3**), grâce à la résine thermodurcissable qui est partiellement polymérisée et qui présente, à température ambiante, un tack résiduel, de manière à former un tapis de faible cohésion propre présentant, à température ambiante, une souplesse relative et une aptitude à l'enroulement.

2. Produit intermédiaire selon la revendication 1, **caractérisé en ce que** la couche (**2**) est associée à au moins un substrat (**4, 5, 6**).

3. Produit intermédiaire selon la revendication 2, **caractérisé en ce que** le substrat constitue un support de manipulation.

4. Produit intermédiaire selon la revendication 3, **caractérisé en ce que** le substrat constitue un élément de renfort (**5**) continu de même nature chimique, au moins en partie polymérisé.

5. Produit intermédiaire selon l'une des revendications 1 à 4, **caractérisé en ce que** la matrice de résine thermodurcissable est à base de résines époxydes.

6. Produit intermédiaire selon l'une des revendications 1 à 5, **caractérisé en ce que** les fibres sont, soit des fils de carbone multifilaments, au moins du type 12 K, soit des fibres de verre de titre voisin de 1 200 Tex, soit des fibres céramiques.

7. Produit intermédiaire selon l'une des revendications 1 à 6, **caractérisé en ce qu'**il se présente sous forme d'une bande ou plaque enroulable.

8. Produit intermédiaire selon l'une des revendications 1 à 7, **caractérisé en ce qu'**il se présente sous la forme d'un enroulement.

9. Produit intermédiaire selon l'une des revendications 1 à 8, **caractérisé en ce qu'**il est constitué par une couche de segments dont la tolérance de grammage en tous points est comprise entre ± 5 %.

10. Produit intermédiaire selon l'une des revendications 1 à 9, **caractérisé en ce qu'**il est constitué par une couche de segments présentant :
• une longueur comprise entre 10 et 100 mm,
• une largeur comprise entre 5 et 50 mm,
• une masse surfacique comprise entre 130 à 1 000 g par mètre carré de fibres sèches.

11. Produit intermédiaire selon l'une des revendications 1 à 10, **caractérisé en ce qu'**il est constitué par une couche de segments issus de lanières (15) découpées à partir d'une nappe (**11₁**) de fibres noyées dans une matrice de résine dont le pourcentage est compris entre 15 et 60 % en masse par rapport à la masse totale de la nappe à l'unité de surface.

12. Produit intermédiaire selon l'une des revendications 1 à 11; **caractérisé en ce que** la couche est constituée à partir de segments présentant des caractéristiques dimensionnelles identiques.

13. Produit intermédiaire selon l'une des revendications 1 à 12, **caractérisé en ce que** la couche possède des bordures franches (9) obtenues par découpe.

14. Procédé de fabrication du produit intermédiaire selon l'une des revendications 1 à 13, **caractérisé en ce qu'**il consiste à :
• disposer d'une nappe comprenant un taux élevé de fibres noyées dans une matrice de résine thermodurcissable qui les imprègne à coeur,
• découper ladite nappe (**11₁**) en lanières parallèles (**15**) qui sont soumises à des coupes transversales pour former des segments (**1**)**,**
• déposer lesdits segments à plat, de façon aléatoire, pour former au moins une couche (**2**) d'épaisseur constante, homogène, dans le plan de laquelle lesdits segments sont répartis de façon quasi isotrope,
• soumettre la couche à l'action de moyens (**18, D, 22)** à même de provoquer l'adhésion d'au moins certains des segments en leurs points de croisement-superposition sans entièrement polymériser la matrice de résine thermodurcissable, de manière à obtenir, à température ambiante, un tack résiduel et conférer à ladite couche une faible cohésion propre et une souplesse relative.

15. Procédé selon la revendication 14, **caractérisé en ce qu'**on constitue le produit intermédiaire en formant au moins une couche de segments sur un support.

16. Procédé selon la revendication 14 ou 15, **caractérisé en ce qu'**on constitue le produit intermédiaire en formant au moins une couche de segments associée au moins à un support constituant un élément de renfort.

17. Procédé selon l'une des revendications 14 à 16, **caractérisé en ce qu'**on coupe les lisières de la couche pour obtenir des bordures franches.

18. Utilisation du produit intermédiaire selon l'une des revendications 1 à 13, en tant que matériau de base pour la formation par moulage à chaud d'au moins un article fini à partir d'au moins une découpe patronnée dudit produit déposée dans un moule.

19. Utilisation du produit intermédiaire selon la revendication 18, **caractérisée en ce qu'**on adjoint, dans le moule, un élément de renfort, de préférence de type continu, de même nature chimique que le produit intermédiaire et au moins en partie polymérisé.

## Claims

1. Intermediate composite product composed of segments of fibres embedded in a thermosetting resin matrix, presented in the form of at least one layer (2) of flat multifibre segments (1) that are deposited on top of one another, oriented randomly and distributed in a virtually isotropic manner in the plane of the layer so as to form a mat of constant weight and thickness, the product being **characterised in that** at least some of the segments are bonded by adhesion at the points where their zones intersect/overlap (3), owing to the thermosetting resin that is partially polymerised and has residual tack at ambient temperature so as to form a mat with low cohesion properties presenting, at ambient temperature, relative flexibility and roll up capacities.

2. Intermediate product according to claim 1, **characterised in that** the layer (2) is associated with at least one substrate (4, 5, 6).

3. Intermediate product according to claim 2, **characterised in that** the substrate constitutes a handling medium.

4. Intermediate product according to claim 3, **characterised in that** the substrate constitutes a continuous reinforcement element (5) of the same chemical nature, at least partially polymerised.

5. Intermediate product according to one of claims 1 to 4, **characterised in that** the thermosetting resin matrix is made of epoxy resins.

6. Intermediate product according to one of claims 1 to 5, **characterised in that** the fibres are either multifilament carbon fibres, at least of type 12K, or glass fibres of approximately 1200 tex, or ceramic fibres.

7. Intermediate product according to one of claims 1 to 6, **characterised in that** it is presented in the form of a roll up strip or plate.

8. Intermediate product according to one of claims 1 to 7, **characterised in that** it is presented in the form of a roll up.

9. Intermediate product according to one of claims 1 to 8, **characterised in that** it is constituted of a layer of segments whose gram tolerance at all points is ± 5%.

10. Intermediate product according to one of claims 1 to 9, **characterised in that** it is constituted of a layer of segments presenting:
• length ranging from 10 to 100 mm;
• width ranging from 5 to 50 mm; and
• surface density ranging from 130 to 1000 g per square meter of dry fibres.

11. Intermediate product according to one of claims 1 to 10, **characterised in that** it is constituted of a layer of segments made from strips (15) cut from a web (11₁) of fibres embedded in a resin matrix, which represent from 15 to 60% in weight compared to the total weight of the web per surface unit.

12. Intermediate product according to one of claims 1 to 11, **characterised in that** the layer is constituted from segments presenting identical dimensional characteristics.

13. Intermediate product according to one of claims 1 to 12, **characterised in that** the layer has clean edges (9) obtained by cutting.

14. Method for manufacturing the intermediate product according to one of claims 1 to 13, **characterised in that** it consists in:
• having a web containing a high percentage of fibres embedded in a thermosetting resin matrix that impregnates said fibres to their core;
• cutting said web (11₁) into parallel strips (15) that are then cut transversely to form segments (1);
• depositing said segments flat, in a random manner, to form at least one homogeneous layer (2) of uniform thickness, in the plane of which layer said segments are distributed in a virtually isotropic manner; and
• subjecting the layer to the action of methods (18, D, 22) that will result in the adhesion of at least some of the segments at their points of intersection/overlapping without entirely polymerising the thermosetting resin matrix, so as to obtain a residual tack at ambient temperature, and to give said layer cohesion properties and relative flexibility.

15. Method according to claim 14, **characterised in that** the intermediate product is made by forming at least one layer of segments on a support.

16. Method according to claim 14 or 15, **characterised in that** the intermediate product is made by forming at least one layer of segments associated with at least one support constituting a reinforcement element.

17. Method according to one of claims 14 to 16, **characterised in that** the edges of the layers are cut so as to obtain clean edges.

18. Use of the intermediate product according to one of claims 1 to 13, as a base material for the formation by hot moulding of at least one finished product made from at least one patterned cutting of said product placed in a mould.

19. Use of the intermediate product according to claim 18, **characterised in that** a reinforcement element is added to the mould, preferably of the continuous type, of the same chemical nature as the intermediate product and at least partially polymerised.

## Patentansprüche

1. Verbundstoff-Zwischenprodukt auf der Basis von Fasersegmenten, welche in eine duroplastische Harzmatrix getaucht sind, das sich in der Gestalt von mindestens einer Schicht (2) von flachen mehrfaserigen Segmenten (1) darstellt, die übereinander gelegt sind, indem sie zufällig ausgerichtet werden und auf eine fast in allen Richtungen gleiche Weise in der Ebene der Schicht derart verteilt werden, dass sie eine Matte mit einer konstanten Masse und Dicke ausbilden, **dadurch gekennzeichnet, dass** die Segmente, zumindest einige von ihnen, durch Haftung in Richtung ihrer übereinander liegenden Kreuzungsbereiche (3) aufgrund des duroplastischen Harzes verbunden sind, das teilweise polymerisiert ist und das bei Umgebungstemperatur eine verbliebene Klebrigkeit derart aufweist, dass es eine Matte geringer Eigenhaftung ausbildet, die bei Umgebungstemperatur eine relative Nachgiebigkeit und eine Fähigkeit zum Aufrollen aufweist.

2. Zwischenprodukt nach Anspruch 1, **dadurch gekennzeichnet, dass** die Schicht (2) mindestens einem Substrat (4, 5, 6) zugeordnet ist.

3. Zwischenprodukt nach Anspruch 2, **dadurch gekennzeichnet, dass** das Substrat einen Bearbeitungsträger ausgestaltet.

4. Zwischenprodukt nach Anspruch 3, **dadurch gekennzeichnet, dass** das Substrat ein kontinuierliches Verstärkungselement (5) chemischer Beschaffenheit ausgestaltet, das mindestens teilweise polymerisiert ist.

5. Zwischenprodukt nach einem der Ansprüche 1 bis 4, **dadurch gekennzeichnet, dass** die Basis der duroplastischen Harzmatrix aus Epoxidharzen besteht.

6. Zwischenprodukt nach einem der Ansprüche 1 bis 5, **dadurch gekennzeichnet, dass** die Fasern entweder Multifilament-Kohlenstofffasern mindestens des Typs 12 K oder Glasfasern mit einer Feinheit in der Nähe von 1200 Tex oder Keramikfasern sind.

7. Zwischenprodukt nach einem der Ansprüche 1 bis 6, **dadurch gekennzeichnet, dass** es sich in Gestalt eines Streifens oder einer Platte darstellt, der bzw. die aufgerollt werden kann.

8. Zwischenprodukt nach einem der Ansprüche 1 bis 7, **dadurch gekennzeichnet, dass** es sich in Gestalt einer Aufwickelung darstellt.

9. Zwischenprodukt nach einem der Ansprüche 1 bis 8, **dadurch gekennzeichnet, dass** es aus einer Schicht von Segmenten ausgestaltet wird, deren Grammtoleranz an allen Punkten zwischen ± 5 % beträgt.

10. Zwischenprodukt nach einem der Ansprüche 1 bis 9, **dadurch gekennzeichnet, dass** es durch eine Schicht von Segmenten ausgestaltet wird, die Folgendes aufweist:
- eine Länge, die zwischen 10 und 100 mm beträgt,
- eine Breite, die zwischen 5 und 50 mm beträgt,
- eine Oberflächenmasse, die zwischen 130 bis 1.000 g pro Quadratmeter trockener Fasern beträgt.

11. Zwischenprodukt nach einem der Ansprüche 1 bis 10, **dadurch gekennzeichnet, dass** es aus einer Schicht von Segmenten ausgestaltet wird, die aus Riemchen (15) stammen, die aus einer Lage (11₁) von Fasern geschnitten werden, die in eine Harzmatrix getaucht werden, deren Prozentanteil an Masse zwischen 15 und 60 % im Verhältnis zu der Gesamtmasse der Lage als Oberflächeneinheit beträgt.

12. Zwischenprodukt nach einem der Ansprüche 1 bis 11, **dadurch gekennzeichnet, dass** die Schicht ausgehend von Segmenten ausgestaltet wird, welche identische Eigenschaften in der Abmessung aufweisen.

13. Zwischenprodukt nach einem der Ansprüche 1 bis 12, **dadurch gekennzeichnet, dass** die Schicht glatte Ränder (9) umfasst, die durch Abschneiden erhalten werden.

14. Verfahren zur Herstellung des Zwischenproduktes nach einem der Ansprüche 1 bis 13, **dadurch gekennzeichnet, dass** es daraus besteht:
- eine Lage anzuordnen, die einen hohen Gehalt an Fasern umfasst, die in eine duroplastische Harzmatrix getaucht werden, in welcher sie satt getränkt werden,
- die Lage (11₁) in parallele Riemchen (15) zu zerschneiden, die quer abgeschnitten werden, um Segmente (1) auszubilden,
- die Segmente flach, auf zufällige Weise abzulegen, um mindestens eine Schicht (2) konstanter, homogener Dicke in der Ebene auszubilden, in welcher die Segmente auf fast in allen Richtungen gleiche Weise verteilt werden,
- die Schicht der Wirkung von Mitteln (18, D, 22) auszusetzen, die in der Lage sind, die Haftung von mindestens einigen Segmenten an ihren übereinander liegenden Kreuzungspunkten hervorzurufen, ohne die duroplastische Harzmatrix vollständig zu polymerisieren, um bei Umgebungstemperatur eine verbliebene Klebrigkeit zu erreichen und der Schicht eine Eigenkohärenz und eine relative Nachgiebigkeit zu verleihen.

15. Verfahren nach Anspruch 14, **dadurch gekennzeichnet, dass** das Zwischenprodukt ausgestaltet wird, indem mindestens eine Schicht von Segmenten auf einem Träger ausgebildet wird.

16. Verfahren nach Anspruch 14 oder 15, **dadurch gekennzeichnet, dass** das Zwischenprodukt ausgestaltet wird, indem mindestens eine Schicht von Segmenten ausgebildet wird, die mindestens einem Träger zugeordnet wird, der ein Verstärkungselement ausgestaltet.

17. Verfahren nach einem der Ansprüche 14 bis 16, **dadurch gekennzeichnet, dass** die Abschlusskanten der Schicht geschnitten werden, um glatte Ränder zu erhalten.

18. Verwendung des Zwischenproduktes nach einem der Ansprüche 1 bis 13, als Basismaterial für die Ausbildung durch Spritzgießen von mindestens einem Fertigartikel ausgehend von mindestens einem abgeschnittenen Stück des Produktes, das in eine Spritzform abgelegt wird.

19. Verwendung des Zwischenproduktes nach Anspruch 18, **dadurch gekennzeichnet, dass** ein Verstärkungselement, vorzugsweise kontinuierlichen Typs, mit derselbe chemischen Beschaffenheit wie das Zwischenprodukt und das mindestens teilweise polymerisiert ist, in die Spritzform hinzugefügt wird.
